# EUROPÄISCHE PATENTSCHRIFT

(11) **EP 0 449 978 B1**
(45) Veröffentlichungstag und Bekanntmachung des Hinweises auf die Patenterteilung: **20.04.1994**
(21) Anmeldenummer: 90901777.4
(22) Anmeldetag: 22.12.1989
(51) Int. Cl.: B29C 47/00, B29C 47/80, B29C 47/64, B29C 45/00

(54) **VERFAHREN ZUR HERSTELLUNG VON KUNSTSTOFFORMTEILEN**
PROCESS FOR PRODUCING PLASTIC MOULDINGS
PROCEDE DE FABRICATION DE PIECES MOULEES EN PLASTIQUE

(30) Priorität: 23.12.1988 DE 3843576
(43) Veröffentlichungstag der Anmeldung: 09.10.1991
(73) Patentinhaber: JV KUNSTSTOFFWERK GMBH, D-91166 Georgensgmünd (DE)
(72) Erfinder: KNISS, Kurt, D-6465 Biebergemünd (DE)
(74) Vertreter: Keil, Rainer A., Dipl.-Phys. Dr.
(86) Internationale Anmeldenummer: EP8901599
(87) Internationale Veröffentlichungsnummer: WO9007412

(56) Entgegenhaltungen:
- EP-A- 0 113 041
- EP-A- 0 118 847
- DD-A- 134 615
- DD-A- 233 270
- DE-A- 3 150 757
- DE-A- 3 233 416
- FR-A- 1 526 053
- GB-A- 2 012 659

## Beschreibung

Die Erfindung bezieht sich auf ein Verfahren zur Herstellung von dicken, vorzugsweise plattenförmigen Formteilen oder Formteilen mit Bereichen unterschiedlich starken Querschnitts aus thermoplastischem Kunststoff, bei welchem man mindestens ein Teil des Kunststoffmaterials als Schmelze in eine beheizbare und ggf. kühlbare Form, z.B. Preß- oder Spritzform, einbringt und preßt oder spritzgießt.

Ein solches Verfahren ist insbesondere für die Herstellung von Kammer- und Membranfilterplatten von Interesse, welche aus einem dickwandigen Rand und einem wesentlich dünneren inneren Bereich (Plattenspiegel) bestehen. Diese Form der Kammer- und Membranfilterplatten ist notwendig für den Einsatz in sogenannten Filterpressen, da die Filterkammern derartiger Filterpressen durch Vertiefungen in den einzelnen Filterplatten gebildet werden, wenn diese aufgereiht mit dem Rand aneinanderliegend in einem Plattenpaket zusammengespannt sind. Der erheblich dickere Rand der Platten dient dabei als Dichtflache gegen den Austritt von in die Filterkammern eingepreßten, zu filtrierenden Suspensionen.

Die Herstellung derartiger dicker, insbesondere unterschiedlich dicker Formteile bereitet deswegen Schwierigkeiten, weil durch die große, insbesondere unterschiedliche Materialstarke beim Abkühlen in der Form nach der Herstellung aus geschmolzenem Kunststoff die Bildung von Lunkern, Einfallstellen in der Oberfläche und Spannungen, die sogar bis zur Rißbildung führen können, auftreten. Daher muß die Abkühlung in der Preßform sehr langsam und vorsichtig unter stehend bleibendem Preßdruck vorgenommen werden, was nicht nur sehr zeitaufwendig ist sondern auch die Preßform für diesen Zeitraum belegt ist.

Um derartige Formteile unterschiedlichen Querschnitts mit weitgehend homogenem Materialgefüge ohne Lunkerbildung herzustellen, ist in der DE 31 38 858 C2 ein Verfahren vorgeschlagen, bei welchem ein Vorformling in Form einer beidseitig ebenen Platte in die geöffnete Preßform eingelegt, die Preßform dann geschlossen und der Vorformling unter Wärme und Druck zum Schließen gebracht wird, wobei in einer ersten Phase der Vorformling mit geringem Druck beaufschlagt wird, um diesen Vorformling beidseitig vermittels der erhitzten Preßform zu schmelzen, und dann in einer zweiten Phase in zeitlicher Anpassung an den Oberflächenschmelzvorgang des Vorformlings der Abstand zwischen Ober- und Unterteil der Preßform durch Drucksteigerung zunehmend vermindert wird. Das von beiden Oberflächen des plattenförmigen Vorformlings geschmolzene Material wird durch den Druck der Preßform in den Randbereich gedrängt und füllt schließlich den gesamten Randbereich aus. Diese Art der Herstellung erfordert einen hohen Aufwand an Zeit und technischer Erfahrung und schließt dabei die Bildung von Lunkern, eingefallenen Stellen in der Oberfläche des fertigen Formteils sowie sich bildende Spannungen, die zu Rißbildungen führen können, nicht mit Sicherheit aus.

Dem gleichen Ziel der Herstellung von Formteilen mit homogenem Materialgefüge ohne Lunkerbildung dient das Verfahren, welches aus der DE-A-3 138 857 bekannt ist. Hierbei werden in die Preßform vorgefertigte Teilformlinge eingelegt, nämlich ein den fertigen Rand bildender Rahmen sowie Stütznocken im Plattenspiegelbereich, welche der gegenseitigen Abstützung der Filterplatten im Plattenpaket dienen. Danach werden die übrigen in der Preßform verbleibenden Hohlräume mit Kunststoffgranulat gefüllt und dann mit dem vorgefertigten, den Rand bildenden Rahmen und den Stütznocken unter Beheizung der Preßform verpreßt. Mit diesem Verfahren soll während der Abkühlung das fertige Formteil überall um den gleichen Betrag schrumpfen. Abgesehen davon, daß das Verfahren verhältnismäßig zeit- und kostenaufwendig ist, können Spannungen und Brüche, insbesondere im Bereich des Übergangs vom Plattenspiegel zu den Stütznocken und zum Randbereich nicht mit Sicherheit ausgeschlossen werden.

Aus der EP-A-0 118 847 sind ein Verfahren und eine Vorrichtung zur Herstellung von mit Verstärkungsstoff (z.B. Glasfaser) zu füllendem, als Granulat zugeführten thermoplastischem Material mit einem das Material aufschmelzenden Schneckenextruder bekannt, bei welchem dem erschmolzenes Material enthaltenden Mischbereich des Extruders der Verstärkungsstoff mit Zusatzgranulat zugeführt wird. Das Zusatzgranulat wird getrennt von dem Verstärkungsstoff vor diesem zugeführt. Beim Schneckenextruder liegt der Zuführungskanal für das Zusatzgranulat am Anfang des Mischbereichs, der Zuführungskanal für den Verstärkungsstoff dicht danach. Zwischen den beiden Zuführungskanälen ist die Schnecke durch Misch- bzw. Knetelemente unterbrochen. Das thermoplastische Material verläßt vollständig erschmolzen das Extruderende.

Aus der EP-A-0 113 041 ist ein Verfahren und eine Vorrichtung zur Bildung und Umschichtung von Teilströmen von aus einer Strangpresse geförderten thermoplastischen bzw. elastomeren Massen bekannt, wobei in dem Kanal einer eine Kunststoffschmelze fördernden Strangpresse den Schmelzestrom in Teilströme auf teilende und diese in relativ zueinander versetzter Form wieder zusammenführende Verteilerelemente angeordnet sind. Um sich bei der Verteilung der Teilströme ergebende Grenzschichtfehler zu verringern, werden die einzelnen Teilströme durch mindestens eine ringförmige Verteilerscheibe, die auf der Anströmseite auf einer umlaufenden ringförmigen Linie mit Bohrungen versehen ist, die abwechselnd radial nach außen und radial nach innen verlaufen, in sektorartige Teilströme aufgeteilt, die abwechselnd radial nach innen und radial nach außen geleitet und wiedervereinigt werden.

Aufgabe der vorliegenden Erfindung ist es, ein Verfahren der eingangs genannten Art so auszubilden, daß mit ihm Fertigformteile ohne die geschilderten Nachteile schnell und zuverlässig hergestellt werden können.

Diese Aufgabe wird erfindungsgemäß im wesentlichen dadurch gelöst, daß man der Schmelze vor dem Einbringen in die Preßform ein Granulat des Kunststoffmaterials beimischt. Hierdurch werden mehrere Vorteile gleichzeitig erreicht: Da nur ein Teil des Kunststoffmaterials in Schmelze überführt werden muß, während der andere Teil als Granulat Einsatz findet, ist für die Herstellung des Gemischs aus Schmelze und Granulat nur ein verhältnismäßig geringer Energieaufwand erforderlich. Durch die Zumischung des Granulats zu der Schmelze wird außerdem die Temperatur des Kunststoffgemisches bereits vor Einbringung in die Form abgesenkt, so daß auch eine schnellere Abkühlung des fertigen Formteils in der Form erreicht werden kann.

Eine besonders einwandfreie homogene Struktur des Formteils erhält man insbesondere dann, wenn die Schmelze und das Granulat beim Zumischen des Granulats eine Temperatur haben, welche zu einem lediglich oberflächlichen Anschmelzen des beigemischten Granulats führt. Entsprechende Variationen der Mengenverhältnisse und/oder der Granulatgröße können hierbei zur Einstellung und Regulierung der gewünschten Temperaturverhältnisse dienen. Auf diese Weise wird einerseits das Granulat einwandfrei und ohne die Gefahr von Rißbildungen in die aushärtende Schmelze eingebettet, während andererseits die kaltbleibenden Kernbereiche des Granulats für ein schnelles Abkühlen des fertigen Formteils sorgen. Das fertige Formteil wird dabei also nicht nur über die kühlbare Form von außen abgekühlt, sondern quasi auch von innen heraus.

Ein weiteres besonderes Erfindungsmerkmal ist darin zu sehen, daß das Gemisch aus Schmelze und Granulat beim Einbringen in die Form eine Temperatur hat, welche geringfügig oberhalb der Kristallisationstemperatur oder eine Temperatur im teilkristallinen Temperaturbereich des Kunststoffmaterials der Schmelze hat. Bei dieser Verfahrensweise wird besonders energiesparend bei schnellem Abkühlen des fertigen Formteils in der beispielsweise gekühlten Form erreicht, so daß ein hoher Durchsatz erzielt werden kann.

Das Gemisch aus Schmelze und Granulat wird vorzugsweise mittels eines Extruders oder einer Spritzgießmaschine hergestellt und der Form zugeführt. Hierdurch ist das erfindungsgemaße Verfahren mit verhältnismäßig geringem apparativem Aufwand auszuführen.

Dabei ist es von besonderer Wirtschaftlichkeit, wenn in einem ersten Abschnitt des Extruders oder der Spritzgießmaschine die Schmelze hergestellt, in einem zweiten Abschnitt Schmelze und Granulat gemischt und zwischen beiden Abschnitten bzw. im zweiten Abschnitt das Granulat zugemischt wird.

Bei der Verwendung von Polypropylen als Kunststoffmaterial, welches für die Herstellung von Filterplatten besonders geeignet ist, wird mit der Erfindung vorgeschlagen, die Schmelze auf etwa 180°C bis 250°C zu bringen und das Granulat mit Zimmertemperatur der Schmelze zuzugeben. Hierdurch ist es also nur erforderlich, die Energie für das Aufschmelzen eines Teils des Kunststoffmaterials aufzubringen, während für das Granulat keine große Schmelzenergie erforderlich ist. Ersichtlich ist es aber auch möglich, die beiden Temperaturen zur Einstellung eines optimalen Verhältnisses zu variieren, also beispielsweise auch das Granulat vorzuwärmen, um beispielsweise bei niedrigerer Schmelzentemperatur gerade noch das Anschmelzen der Oberflächenschicht des Granulats bei dessen Zumischung in die Schmelze zu erreichen. Für andere Kunststoffe ist ohne weiteres eine entsprechende Anpassung der genannten Temperaturen möglich.

Das erfindungsgemäße Verfahren bietet auch den Vorteil, daß man der Schmelze Füllstoffe, wie Kreide od. dgl., zugeben kann, wenn Formteile oder Bereiche von Formteilen oder Vorformlinge aus einem Material geringerer Qualität hergestellt werden können, die beispielsweise danach mit einer Schicht aus Kunststoff hoher Qualität ummantelt werden.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: im Vertikalschnitt schematisch eine die Erfindung aufweisende als Extruder ausgebildete Vorrichtung zur Herstellung eines Gemisches aus einer Schmelze und einem Granulat,
- Fig. 2a und 2b: im Schnitt bzw. in Ansicht (teilweise weggebrochen) ein erfindungsgemäßes Mischerelement und seine Anordnung in der Extruderwelle, und
- Fig. 2c und 2d: (teilweise weggebrochene) Ansichten zweier anderer Mischerelemente nach der Erfindung.

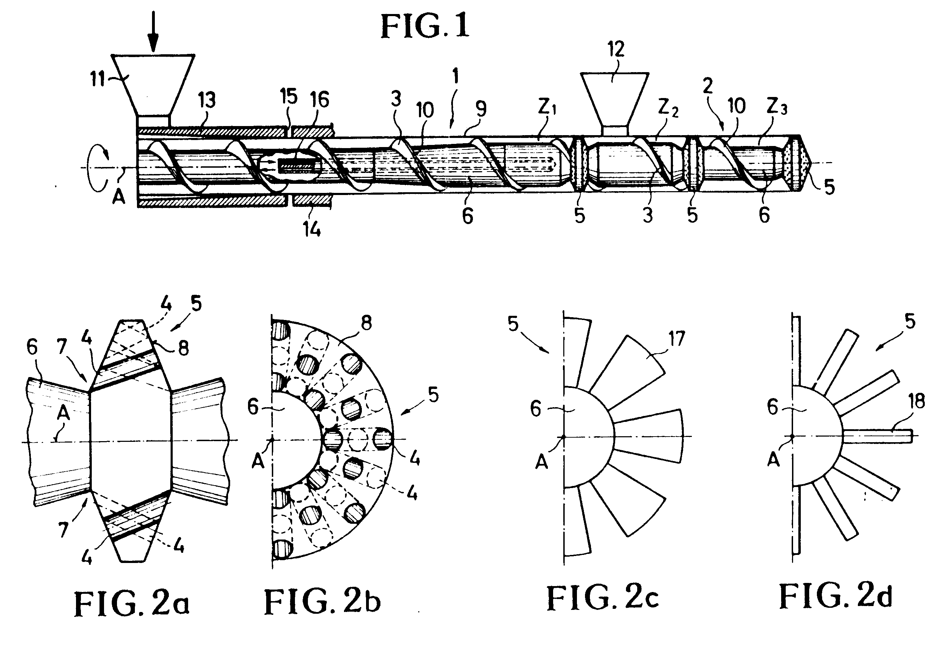

Die in den Figuren dargestellte Vorrichtung zur Herstellung eines Gemisches aus einer Schmelze und einem Granulat aus Kunststoff, welches insbesondere bei der Herstellung von dicken, vorzugsweise plattenförmigen Formteilen oder Formteilen mit Bereichen unterschiedlich starken Querschnitts verwendet wird, bei welchem man mindestens ein Teil des Kunststoffmaterials als Schmelze in eine beheizbare und ggf. kühlbare Form einbringt und preßt oder spritzgießt, ist gemäß Fig. 1 als Extruder ausgebildet, welchem das Kunststoffmaterial für die Herstellung der Schmelze über einen Aufgabetrichter 11 und das zuzumischende Granulat über einen Aufgabetrichter 12 mit Granulatpumpe zugeführt wird. Der Aufgabetrichter 11 ist an einer stationären Eingangshülse 13 angebracht und mündet von da aus in einen beheizbaren Extruderzylinder 9. Der Extruderzylinder 9 ist in einer Lagerhülse 14 aufgenommen, welche über einen thermische Trennung von der Eingangshülse 13 getrennt ist. Ein erster Abschnitt des Extruders ist als Schmelzextruder 1 und ein nachfolgender Abschnitt des Extruders als Schmelzextruder 2 mit Mischeigenschaften ausgebildet. Der Aufgabetrichter 12 für das Granulat ist im dargestellten Fall im Anfangsbereich des Schmelzextruders 2 vorgesehen. Zum Zwecke der Herstellung der Schmelze ist, neben dem Extruderzylinder 9, die Extruderschnecke 3 beheizt, und zwar im dargestellten Fall durch ein Heizfluid, welches durch in der Extruderwelle 6 angeordnete zylindrische Bohrungen 16 oder darin untergebrachte Leitungen, wie mit Pfeilen angedeutet, geführt wird. Der Extruderzylinder 9 hat über segne Länge im wesentlichen gleichen Innenquerschnitt, während der Durchmesser der Extruderwelle 6 im beheizten Abschnitt des Schmelzextruders 1 in Förderrichtung zunimmt, so daß der Spalt zwischen Extruderwelle 6 und Innenwandfläche des Extruderzylinders 9 abnimmt. Auf diese Weise entsteht bei Förderung der Schmelze durch Antrieb der Extruderwelle 6 über den Schneckengang 10 aufgrund der allmählichen Aufweitung des Wellenquerschnitts eine allmähliche Kompression der Schmelze, wodurch die mit der Aufgabe des Kunststoffmaterials über den Aufgabetrichter 11 in den Extruder eingetragene Luft über den Aufgabetrichter 11 wieder herausgedruckt wird, so daß die Schmelze im entgasten Zustand in den zweiten Schmelzextruder 2 gelangt.

Wie sich aus Fig. 1 ergibt ist der Querschnitt der Extruderwelle 6 im Bereich der Kammer Z2 etwas geringer als in der Kammer Z1 im Endbereich des ersten Schmelzextruders 1, so daß hierdurch eine Dekompression auftritt. In diesem Bereich wird das Granulat über den Aufgabetrichter 12 mit einer Granulatpumpe zugeführt. In der Bereich der Kammer Z3 kurz vor dem Ends des zweiten Schmelzextruders 2 ist der Querschnitt der Extruderwelle 6 nochmals geringfügig zur weiteren Dekompression verringert, so daß wenig Friktionswärme entsteht.

In konischen Vertiefungen 7 im Übergangsbereich von Schmelzextruder 1 zu Schmelzextruder 2 und etwa in der Mitte des Schmelzextruders 2 befinden sich in der oder auf der Extruderwelle 6 scheibenförmige und mit Öffnungen 4 versehene, mit der Extruderschnecke 3 mitdrehbare Mischerelemente 5, deren Gestalt aus den Fig. 2a und 2b deutlicher erkennbar ist. In den Einsenkungen 7 ragt das jeweilige Mischerelement 5 mit im Querschnitt trapezförmigen Mischabschnitten 8 bis in unmittelbare Nachbarschaft der Innenwandfläche des Extruderzylinders 9. In diesen Mischabschnitten 8 befinden sich die Öffnungen 4. Sie sind, wie aus den Fig. 2a und 2b hervorgeht, über die gesamte Anströmfläche der Mischabschnitte 8 verteilt und - in Förderrichtung des Extruders gesehen - teilweise von radial innen nach radial außen und teilweise von radial außen nach radial innen schräggestellt, so daß in der jeweiligen von den Einsenkungen 7 gebildeten Mischzonen eine Überführung der heißen Schmelze von der Zylinderwandung nach innen und der kälteren Schmelze vom Schneckengangkernbereich nach außen erfolgt und eine intensive Durchmischung und Vergleichmäßigung der Temperatur der Schmelze mit dem Granulat stattfindet. Gefördert wird diese Mischeffekt durch die jeweilige Aufweitung der Kammer Z2 gegenüber der Kammer Z1 und der Kammer Z3 gegenüber der Kammer Z2. Die Mischerelemente 5 können auch mit über den Umfang der Extruderwelle 6 verteilte Lamellen 17 oder Stifte 18 besetzt sein.

Am Abgabeende der Extruderschnecke 3 ist ein weiteres Mischerelement 5 vorgesehen. Von da aus gelangt die intensive Mischung aus Schmelze und Granulat unmittelbar in die Form. Daben kann noch eine Abgabeduse vorgesehen sein, die vorzugsweise flach ausgebildet ist, um die "kalte Schmelze", also das Gemisch aus Schmelze und Granulat, mit einer Endtemperatur geringfügig oberhalt der Kristallisationstemperatur des Kunststoffs bandförmig in die Form eingelegt werden kann. Dadurch kann bereits eine gewisse geeignete Vorverteilung des Schmelze-Granulat-Gemischs in der Form erreicht werden. Bei dem dann folgenden Preßvorgang verteilt sich die "kalte Schmelze" in dem Preßeninnenraum und füllt diesen in der beheizten Form schließlich vollständig aus.

Die Temperatur der Schmelze und des Granulats werden so aufeinander abgestimmt, daß das Granulat in dem Gemisch lediglich oberflächlich angeschmolzen wird, während die Kernbereiche des Granulats noch fest und verhältnismäßig kalt sind. Bei Abschluß des Preßvorgangs und der anschließenden erforderlichen Kühlung, beispielsweise in der Preßform selbst, die zu diesem Zweck gekühlt werden kann, findet nun ein Temperaturausgleich zwischen den verhältnismäßig kalten Kernbereichen des Granulats und der diese umschließenden Schmelze statt, wodurch ein verhältnismäßig schnelles Abkühlen und Aushärten des Formteils ohne die Gefahr von inhomogenen Strukturen entsteht, weil ein kontinuierlicher Übergang von den angeschmolzenen Granulatkörnern zu der Schmelze geschaffen worden ist.

Auf diese Weise wird schnell und zuverlässig ein Formteil hoher Homogenität erzielt, auch wenn das Formteil verhältnismäßig dick ist bzw. unterschiedlich starke Querschnitte hat.

### Bezugszeichenliste:

- 1: Schmelzextruder
- 2: Mischextruder
- 3: Extruderschnecke
- 4: Öffnungen
- 5: Mischerelemente
- 6: Extruderwelle
- 7: Einsenkungen
- 8: Mischabschnitte
- 9: Extruderzylinder
- 10: Schneckengang
- 11: Aufgabetrichter
- 12: Aufgabetrichter
- 13: Eingangshülse
- 14: Lagerhülse
- 15: thermische Trennung
- 16: Bohrungen
- 17: Lamellen
- 18: Stifte
- A: Achse

## Patentansprüche

1. Verfahren zur Herstellung von dicken, vorzugsweise plattenförmigen Formteilen oder Formteilen mit Bereichen unterschiedlich starken Querschnitts aus thermoplastischem Kunststoff, bei welchem man mindestens ein Teil des Kunststoffmaterials als Schmelze in eine beheizbare und ggf. kühlbare Form, z.B. Preß- oder Spritzform, einbringt und preßt oder spritzgießt, dadurch gekennzeichnet daß man der Schmelze vor dem Einbringen in die Preßform ein Granulat des Kunststoffmaterials beimischt.

2. Verfahren nach Anspruch 1, dadurch gekennzeichnet, daß die Schmelze und das Granulat beim Zumischen des Granulats eine Temperatur haben, welche zu einem oberflächlichen Anschmelzen des beigemischten Granulats führt.

3. Verfahren nach Anspruch 1 oder 2, dadurch gekennzeichnet, daß das Gemisch aus Schmelze und Granulat beim Einbringen in die Form eine Temperatur geringfügig oberhalb der Kristallisationstemperatur oder eine Temperatur im teilkristallinen Temperaturbereich des Kunststoffmaterials der Schmelze hat.

4. Verfahren nach einem der Ansprüche 1 bis 3, dadurch gekennzeichnet, daß das Gemisch aus Schmelze und Granulat mittels eines Extruders oder einer Spritzgießmaschine hergestellt und der Form Zugeführt wird.

5. Verfahren nach Anspruch 4, dadurch gekennzeichnet, daß in einem ersten Abschnitt des Extruders oder der Spritzgießmaschine die Schmelze hergestellt und in einem zweiten Abschnitt Schmelze und Granulat gemischt werden.

6. Verfahren nach einem der Ansprüche 1 bis 5, dadurch gekennzeichnet, daß bei der Verwendung von Polypropylen die Schmelze auf etwa 180°C bis 250°C gebracht und das Granulat mit kälterer Temperatur, z.B. Zimmertemperatur der Schmelze zugegeben wird.

7. Verfahren nach einem der Ansprüche 1 bis 6, dadurch gekennzeichnet, daß der Schmelze Füllstoffe, wie Kreide od. dgl., oder Gase oder dgl. zugegeben werden.

## Claims

1. A process for the production of plastic mouldings, preferably thick slabs or having zones of differing thick cross-section, in synthetic thermoplastic materials, in which at least one proportion of the synthetic material is injected in the molten state into a heatable and optionally coolable mould, for example a compaction or injection die and compacted or injected, characterized in that before the molten material is injected into the compaction die a proportion of granulated synthetic material is blended therein.

2. A process as in Claim 1, characterized in that the molten material and the granulate are blended at a temperature which promotes the superficial melting of the added granulate.

3. A process as in Claim 1 or 2, characterized in that the blend of molten and granulated material is injected into the mould at a temperature slightly above the solidification temperature of the synthetic material in the melt or a temperature between its liquidus and solidue.

4. A process as in any of Claims 1 to 3, characterized in that the blend of molten and granulated material is prepared and injected into the mould with the aid of an extrude or an injection moulding machine.

5. A process as in Claim 4, characterized in that the melt is prepared in an initial section of the extruder or the injection moulding machine and the molten and granulated materials are blended in a second section thereof.

6. A process as in any of Claims 1 to 5, characterized in that when using polypropylene the melt is brought to between about 180 and 250 °C and the granulate is introduced at a lower temperatire, e.g., at room temperature.

7. A process as in any of Claims 1 to 6, characterized in that Filler materials, such as chalk or the like, or gases or the like, are added to the melt.

## Revendications

1. Procédé de fabrication de pièces moulées épaisses en matière thermoplastique, de préférence de pièces moulées en forme de plaques ou de pièces moulées avec des parties d'épaisseurs différentes, selon lequel on place au moins une partie de la matière plastique à l'état fondu dans un moule qui peut être chauffé et éventuellement refroidi, par exemple un moule de compression ou un moule d'injection et on la moule par compression ou par injection, caractérisé par le fait qu'on ajoute à la masse fondue, avant son introduction dans le moule de compression, des granulés de matières plastique.

2. Procédé selon la revendication 1, caractérisé par le fait que la masse fondue et le granulat, lors de l'addition du granulat, ont une température qui entraîne une fusion superficielle du granulat ajouté.

3. Procédé selon la revendication 1 ou 2, caractérisé par le fait que le mélange constitué de la masse fondue et du granulat, lors de l'introduction dans le moule, a une température qui est légèrement supérieure à la température de cristallisation ou une température appartenant au domaine de température de cristallinité de la matière plastique constituant la masse fondue.

4. Procédé selon l'une des revendications 1 à 3, caractérisé par le fait que le mélange constitué de la masse fondue et du granulat est produit au moyen d'une extrudeuse ou d'une machine de moulage par injection et est introduit dans le moule.

5. Procédé selon la revendication 4, caractérisé par le fait que la masse fondue est produite dans une première partie de l'extrudeuse ou de la machine à mouler par injection et que la masse fondue et le granulat sont mélangés dans une deuxième partie.

6. Procédé selon l'une des revendications 1 à 5, caractérisé par le fait que lorsqu'on utilise du polypropylène, on amène la masse fondue à une température comprise entre 180°C et 150°C environ et on ajoute le granulat à une température plus basse, par exemple à la température ambiante.

7. Procédé selon l'une des revendications 1 à 6, caractérisé par le fait que l'on ajoute à la masse fondue des charges telles que de la craie ou analogue ou des gaz ou analogue.
